# EUROPEAN PATENT APPLICATION

(11) **EP 1 941 983 A1**
(43) Date of publication of application: **09.07.2008**
(21) Application number: 06822031.8
(22) Date of filing: 23.10.2006
(51) Int. Cl.: B29C 45/16, B29C 45/13, B29C 45/56, B29C 45/76, B29L 9/00

(54) **APPARATUS FOR INJECTION MOLDING OF LAMINATE, AND METHOD FOR MOLDING OF LAMINATE**

(30) Priority: 25.10.2005 JP 2005309553
(71) Applicant: SUMITOMO HEAVY INDUSTRIES, LTD., Shinagawa-ku, Tokyo 141-8686 (JP)
(72) Inventor: SUZUKI, Motofumi, SUMITOMO HEAVY INDUSTRIES, LTD., Chiba-shi, Chiba 2630001 (JP)
(74) Representative: Emde, Eric
(86) International application number: PCT/JP2006/321010
(87) International publication number: WO 2007/049531

(57) **Abstract**

A laminate injection molding machine has a mold apparatus attached to mold-clamp apparatus, first and second injection apparatuses, first and second cavity drive parts for changing volumes of first and second cavities, and a reverse drive part that rotates a movable mold. A resin of the first layer is injected from the first injection apparatus into the first cavity, and a resin of the second layer is injected from the second injection apparatus into the second cavity. The second cavity is connected to the first injection apparatus and the first cavity is connected to the second injection apparatus by a first moving operation of the reverse drive part. A resin of the third layer is injected from the first injection apparatus into the second cavity.

## Description

### TECHNICAL FIELD

The present invention relates to injection molding machines and molding methods and, more particularly, to a lamination injection molding machine and lamination molding method that performs lamination molding of three or more layers by providing a cavity drive part, which moves a cavity block of a mold forward and backward, to a mold reverse type (rotary type) injection molding machine that integrally molds different kinds of resins.

### BACKGROUND ART

As a two-layer (two-material) molding method, which integrally molds different kinds of resins or the same kind of resins but having different colors or additives, there is known a mold reverse type injection molding machine equipped with a reverse drive part that reversely rotates a movable mold attached to a movable platen of a mold-clamp apparatus on an injection molding machine main frame (hereinafter, simply referred to as a frame) and having two injection apparatuses mounted on the frame, and a two-layer molding method using the injection molding machine (for example, refer to Patent Document 1).

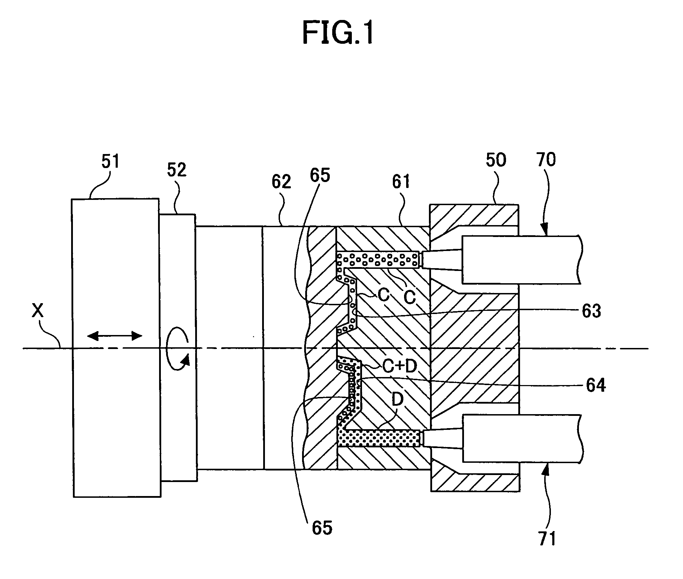

Here, a description will be given, with reference to FIG. 1, of the mold reverse type injection molding machine and a molding sequence of a two-layer molding using the injection molding machine. FIG. 1 is an outline diagram of the mold apparatus of the mold reverse type injection molding machine shown in the Patent Document 1.

A movable platen 51 of a mold-clamp apparatus (only a part is shown) mounted on a frame (not shown in the figure) has a mold reverse plate 52 reversely and rotatably attached about an axis X as a center. The movable platen 51 is movable forward and backward along the axis X. The mold reverse plate 52 is attached with a movable mold 62. The movable mold 62 has a pair of male-side cavity surfaces 65 of the same shape.

A stationary mold 61 is attached to a stationary platen 50 of the mold-clamp apparatus. In the stationary platen 61, there are formed a C-side cavity surface 63 for molding a primary molded product C (a resin and a molded product are indicated) in association with one of the above-mentioned male-side cavity surfaces 65, and a D-side cavity surface 64 for molding a secondary molded product in association with the other of the male-side cavity surfaces 65 holding the primary molded product C.

After completion of mold-clamping, the primary molded product C is molded by a primary resin C being injected between the male-side cavity surface 65 and the C-side cavity surface 63 by the C-side injection apparatus 70 (only a heating cylinder is shown). After completion of cooling, the movable mold 62 is subjected to mold-open by being moved in the axis X direction. In this case, the primary molded product C is supported by the male-side cavity surface 65 in a holding state.

Then, the movable mold 62 reversely rotates by 180 degrees about the X axis as a center. Thereby, the male-side cavity surface 65 supporting the primary molded product C faces the secondary D-side cavity surface 64 of the stationary mold 61.

A mold-clamp is carried out again, and a resin is injected into a gap between the primary molded product C and the D-side cavity surface 64 by the D-side injection apparatus 71 (only a heating cylinder is shown). At this time, a secondary molded product C+D, in which two-kinds of resins are integrally molded, is acquired by the secondary-side resin D and the primary molded product being thermally welded with each other. Simultaneously, a resin is injected between the male-side cavity surface 65 and the C-side cavity surface 63 to mold the primary molded product C.

After completion of cooling, a mold-open is carried out, and the second molded product C+D is taken out of the cavity opposite to the D-side injection apparatus 71, and, thereafter, the movable mold 62 is reversely rotated by 180 degrees and one cycle is ended.

Patent Document 1: Japanese Laid-Open Patent Application No. 2000-309045

### DISCLOSURE OF THE INVENTION

### PROBLEMS TO BE SOLVED BY THE INVENTION

Conventionally, when molding a three-layer laminate molded product, it is general to use a method in which a two-layer intermediate molded product is molded first by a mold reverse type injection molding machine, and, then, the two-layer laminate molded product is inserted into a mold of a different injection molding machine, and third layer resin is injected thereon to mold the three-layer laminate molded product.

In this case, molding machines and peripheral devices, installation cites thereof, operators operating the molding machines corresponding to two machines are needed, which results in a large cost increase. Additionally, although a special three-layer laminate injection molding machine may be used, it cannot be used practically since it has extremely complicated construction.

It is a general object of the present invention to provide a novel and useful laminate injection molding machine and laminate molding method in which the above-mentioned problems are eliminated.

A more specific object of the present invention is to provide a laminate injection molding machine and laminate molding method that can simply acquire a laminate molded product of three or more layers.

### MEANS TO SOLVE THE PROBLEMS

In order to achieve the above-mentioned objects, there is provided according to one aspect of the present invention a laminate injection molding machine for molding a multi-layer laminate product, comprising: a mold-clamp apparatus to which a movable mold and a stationary mold are attached and performs mold-close and mold-clamp; two injection apparatuses mounted on a frame to fill a melted resin into a mold; and a control part that controls the injection apparatuses and the mold-clamp apparatus, wherein the control part controls a cavity drive part that moves a cavity block forward or backward, the cavity block provided at least one of the movable mold and the stationary mold.

It is preferable that the laminate injection molding machine according to the present invention further comprises a reverse drive part that reversely rotates the movable mold, wherein the reverse drive part is controlled by the control part.

Additionally, there is provided according to another aspect of the present invention a laminate molding method performed by a laminate injection molding machine comprising: a mold-clamp apparatus mounted on a frame; a mold apparatus attached to the mold-clamp apparatus; first and second injection apparatuses that inject resin to the mold apparatus; first and second cavity drive parts for changing volumes of first and second cavities formed in the mold apparatus; and a reverse drive part that rotates a movable mold of the mold apparatus, wherein the laminate molding method comprises: injecting a resin of a first layer from the first injection apparatus into the first cavity, and injecting a resin of a second layer from the first injection apparatus into the first cavity; connecting the second cavity to the first injection apparatus and connecting the first cavity to the second injection apparatus by a first moving operation by the reverse drive part; and injecting a resin of a third layer from the first injection apparatus into the second cavity.

In the laminate molding method according to the present invention, it is preferable that after performing the first moving operation, the resin in the second cavity is moved backward by driving the second cavity drive part. It is preferable that the injection from the second injection apparatus into the first cavity is stopped while injecting the resin of the third layer from the first injection apparatus into the second cavity. Additionally, after the injection of the resin of the third layer is completed and the molded product of three layers is taken out of the second cavity, the resin of the first layer may be injected from the first injection apparatus into the second cavity.

Additionally, there is provided according to another aspect of the present invention a laminate molding method performed by a laminate injection molding machine comprising: a mold-clamp apparatus mounted on a frame; a mold apparatus attached to the mold-clamp apparatus; first and second injection apparatuses that inject resin to the mold apparatus; first and second cavity drive parts for changing volumes of first and second cavities formed in the mold apparatus; and a reverse drive part that rotates a movable mold of the mold apparatus, wherein the laminate molding method comprises: injecting a resin of a first layer from the first injection apparatus into the first cavity, and stopping injection of a resin from the second injection apparatus into the second cavity; connecting the second cavity to the first injection apparatus and connecting the first cavity to the second injection apparatus by a first moving operation by the reverse drive part; injecting the resin of the first layer from the first injection apparatus into the second cavity and injecting a resin of a second layer from the second injection apparatus into the first cavity; connecting the first cavity to the first injection apparatus and connecting the second cavity to the second injection apparatus by a second moving operation by the reverse drive part; injecting a resin of a third layer from the first injection apparatus into the first cavity and injecting the resin of the second layer from the second injection apparatus into the second cavity; taking a three-layer molded product out of the first cavity; connecting the first cavity to the second injection apparatus and connecting the second cavity to the first injection apparatus by a third moving operation by the reverse drive part; and injecting the resin of the third layer from the first injection apparatus into the second cavity.

In the above-mentioned laminate molding method, it is preferable that, after performing the second moving operation, the resin in the first cavity is moved backward by driving the first cavity drive part. Additionally, it is preferable that, after performing the third moving operation, the resin in the second cavity is moved backward by driving the second cavity drive part. Additionally, after the third moving operation, the injection of the resin from the second injection apparatus into the first cavity may be stopped.

### EFFECTS OF THE INVENTION

According to the present invention, by providing the cavity drive part, which moves the cavity block of the mold forward and backward, to the mold reverse type injection molding machine, a laminate molded product of three or more layers conventionally molded by two injection machines or a laminate molded product of three or more layers molded by a single three-layer laminate injection molding machine that is special and high-cost can be molded by a single two-layer (two-material) injection molding machine. Thereby, a number of molding machines and a number of peripheral devices can be reduced. Additionally, installation cites thereof can also be reduced, and a number of operators operating the machines can also be reduced. Therefore, a large cost decrease can be achieved.

Other objects, features and advantages of the present invention will become more apparent from the detailed description when read in conjunction with the accompanying drawings.

### BRIEF DESCRIPTION OF DRAWINGS

FIG. 1 is an outline diagram of a mold apparatus of a conventional mold reverse type injection molding machine.
FIG. 2 is a plan view showing an entire structure of a laminate injection molding machine according to a first embodiment of the present invention.
FIG. 3 is a plan view showing the mold apparatus of the laminate injection molding machine shown in FIG. 2 and a peripheral structure thereof, showing a state of a step S1-2 in a sequence shown in FIG. 5.
FIG. 4 is a plan view showing the mold apparatus of the laminate injection molding machine shown in FIG. 2 and a peripheral structure thereof, showing a state of a step S1-7 in the sequence shown in FIG. 5.
FIG. 5 is a sequence diagram of an example of a molding operation performed in the laminate injection molding machine shown in FIG. 2.
FIG. 6 is a sequence diagram of another example of the molding operation performed in the laminate injection molding machine shown in FIG. 2.

### EXPLANATION OF REFERENCE NUMERALS

- 1: main body frame
- 10: mold-clamp apparatus
- 11: stationary platen
- 12: movable platen
- 13: tie bar
- 14: mold rotating plate
- 15: reverse drive part
- 20A,: 20B injection apparatus
- 21A,: 21B heating cylinder
- 30: mold apparatus
- 31: stationary mold
- 32: movable mold
- 33A,: 33B cavity drive part
- 34A,: 34B piston
- 35A,: 35B cavity block
- 36A: R-side cavity surface
- 36B: F-side cavity surface
- 37A: R-side cavity surface
- 37B: F-side cavity surface

### BEST MODE FOR CARRYING OUT THE INVENTION

Hereinafter, a description will be given, with reference to the drawings, of an embodiment of the present invention.

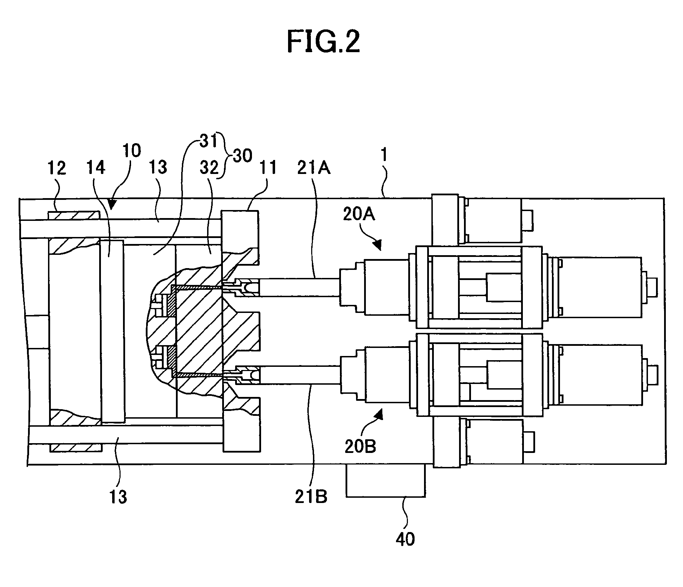

First, a description will be given, with reference to FIG. 2, of an entire structure of a laminate injection molding machine according to an embodiment of the present invention. FIG. 2 is a plan view showing an entire structure of the laminate injection molding machine according to the embodiment of the present invention.

The laminate injection molding machine according to the embodiment of the present invention has a mold-clamp apparatus 10 (only a part is illustrated) and two injection apparatuses 20A and 20B. The mold-clamp apparatus 10 is mounted and fixed to a main body frame 1. The two injection apparatuses 20A and 20B are movably attached to the main body frame 1 forward and backward.

The mold-clamp apparatus 10 has a stationary platen 11 and a movable platen 12 movable to the stationary platen 11. The movable platen 12 is movable along tie bars 13, which extend from the stationary platen 11. A mold apparatus 30 is arranged between the stationary platen 11 and the movable platens 12. Additionally, a mold reverse plate 14 is rotatably attached to the movable platen 12.

The mold apparatus 30 has a stationary mold 31 and a movable mold 32. The stationary mold 31 is attached to the stationary platen 11, and the movable mold 32 is attached to the mold reverse plate 14. Accordingly, the movable mold 32 is movable forward and backward with respect to the stationary mold 31 in association with the forward and backward movements of the movable platen 12, and rotatable in association with the rotation of the mold reverse plate 14.

The two injection apparatuses 20A and 20B have heating cylinders 21A and 21B, respectively, so as to inject resin melted in the heating cylinders 21A and 21B from nozzles at the ends of the heating cylinders 21A and 21B. The injection apparatuses 20A and 20B are movable on the main body frame 1 in an axial direction, and move forward, when injecting the resin into the mold apparatus, so that the nozzles at the end of the heating cylinders 21A and 21B are pressed against the stationary mold 31.

It should be noted that, an operation of each part of the laminate injection molding machine including the mold-clamp apparatus 10 and the injection apparatuses 20A and 20B is controlled by a control device 40. Moreover, the mold-clamp apparatus has, for example, a toggle mechanism as a drive part for moving the movable platen 12 to perform a mold-close and a mold-clamp, but illustration thereof is omitted in FIG. 2.

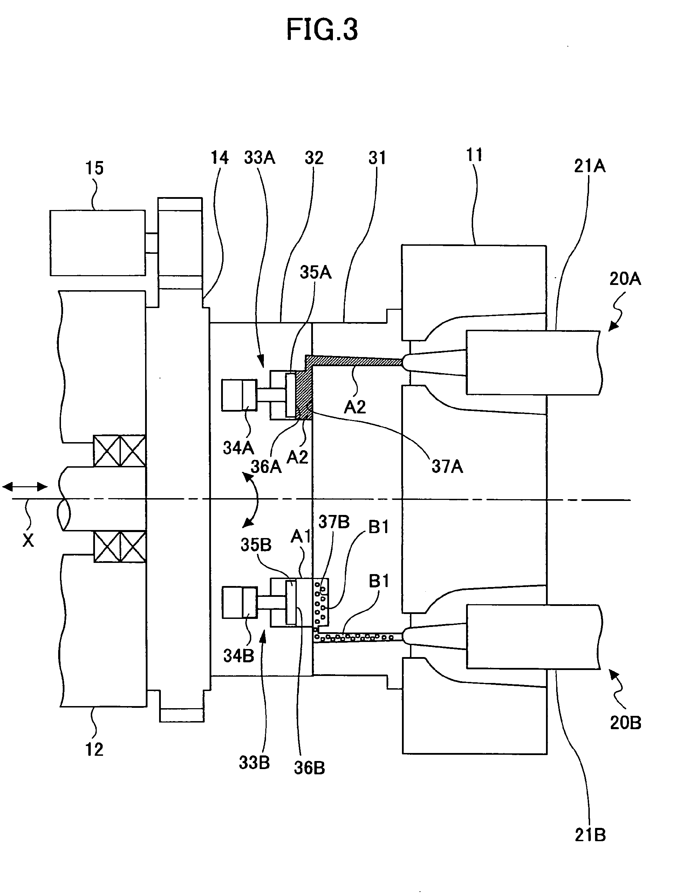

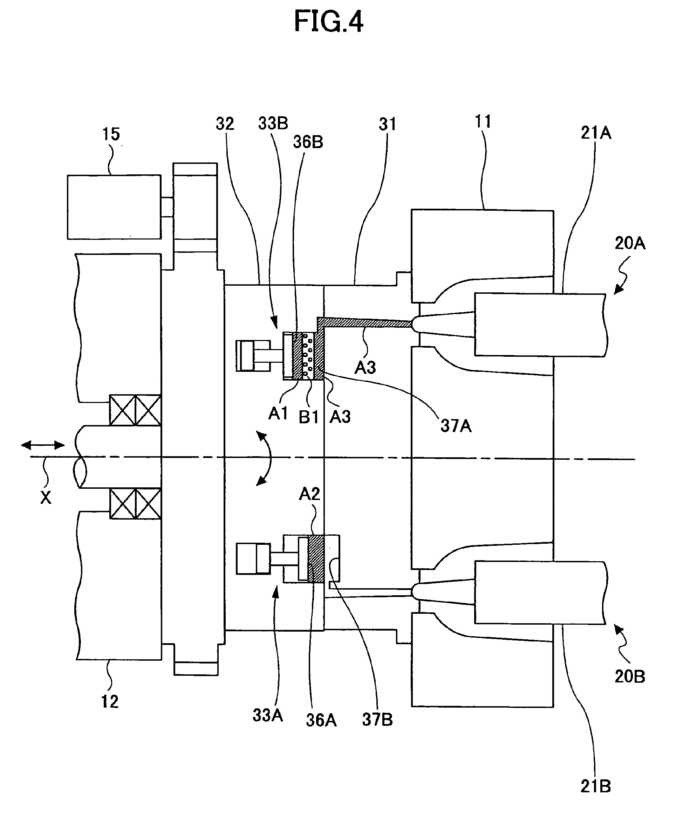

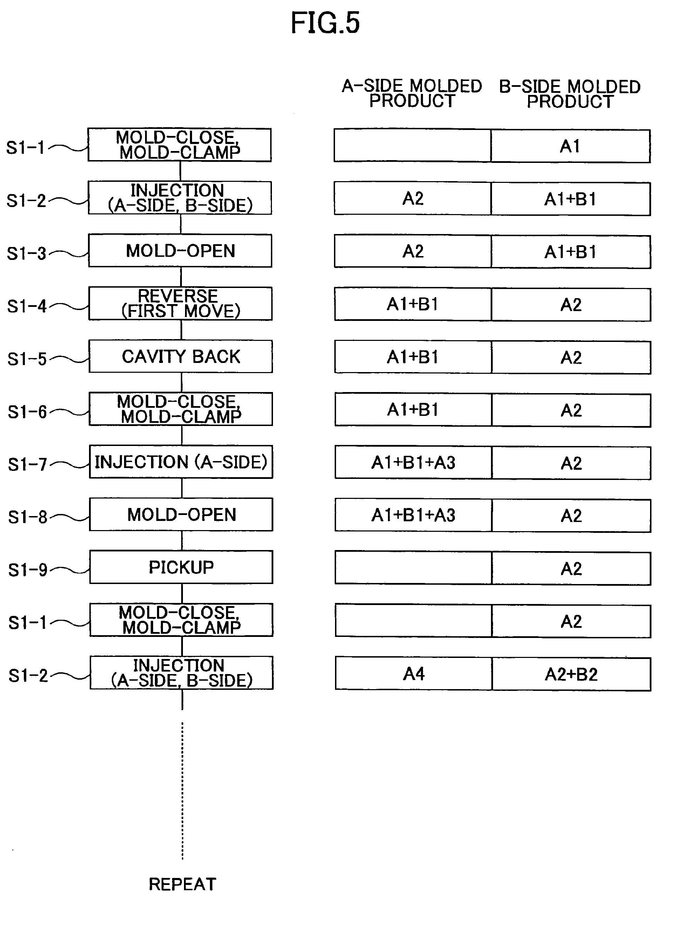

Next, a description will be given, with reference to FIG. 3 and FIG. 4, of the mold reverse plate 14 and the mold apparatus 30. FIG. 3 is a plan view of the mold apparatus of the laminate injection molding machine shown in FIG. 2 and a structure of a periphery thereof, and showing a state of step S1-2 in a sequence shown in FIG. 5. FIG. 4 is a plan view of the mold apparatus of the laminate injection molding machine shown in FIG. 2 and a structure of a periphery thereof, and showing a state of step S1-7 in the sequence shown in FIG. 5.

In FIG. 3, as mentioned above, the mold reverse plate 14 is attached to the movable platen 12 of the mold-clamp apparatus 10 mounted on the main body frame (refer to FIG. 2). The mold reverse plate 14 reversely rotates about the axis X as a center by the drive of the reverse drive part 15 attached to the movable platen 12, and moves forward and backward along the axis X. The movable mold 32 provided with an F-side cavity drive part 3B (bottom side in the figure) and an R-side cavity drive part 33A (top side in the figure) is attached to the mold reverse plate 14.

The R-side cavity drive part 33A has a piston 34A, which moves forward and backward by a hydraulic pressure from a hydraulic apparatus (not shown in the figure). The piston 34A is connected to a cavity block 35A. The cavity block 35A has an R-side cavity surface 36A, which forms an outer surface of a molded product. In FIG. 3, the cavity block 35A is stopped at a maximum forward position (right side in the figure) as a first stop position on the R-side. A gap between the cavity surface 36A and the A-side cavity surface 37A formed in the stationary mold 31 corresponds to a thickness of a molded portion of a first layer.

The F-side cavity drive part 33B has the same structure as the R-side cavity drive part 33A, and detailed explanation thereof will be omitted. The piston 34B of the F-side cavity drive part 33B is coupled to a cavity block 35B, which has the F-side cavity surface 36B forming an outer surface of the molded product, and is stopped at a maximum forward position (right side in the figure) as a previously determined first stop position on the F-side.

In FIG. 2, although the previously determined first stop position on the R-side and the previously determined first stop position on the F-side are the same position in the axis X direction, they may be different positions in response to a molded product. Here, since it is necessary to carry out a synchronous control with each drive part of the injection molding machine, the drive control of the R-side cavity drive part 33B and the F-side cavity drive part 33A is carried out by the control device 40 (refer to FIG. 2) of the injection molding machine.

The stationary mold 31 is attached to the stationary platen 11 of the mold-clamp apparatus 10. The R-side cavity surface 37A and the F-side cavity surface 37B are formed in the stationary mold 31. The F-side cavity side 37B is formed in the position shifted backward from the R-side cavity surface 36A by a distance corresponding to a thickness of the molded product of a second layer in order to mold the second layer in association with the F-side cavity surface 36.

The A-side injection apparatus 20A mounted on the main body frame 1 injects a resin A from the heating cylinder 21A, and, similarly, the B-side injection apparatus 20B injects a resin B from the heating cylinder 21B. FIG. 3 shows a state of step S1-2 of the sequence shown in FIG. 5. In FIG. 3, a molded product A2 is formed by the resin A injected by the A-side injection apparatus in the cavity on the side of the A-side injection apparatus 20A (cavity formed between the R-side cavity surface 36A and the R-side cavity surface 37A). Additionally, a molded product A1 is formed previously in the cavity on the side of the B-side injection apparatus 20B (cavity formed between the F-side cavity surface 36B and the F-side cavity surface 37B), and a molded product B1 is formed by the resin B injected by the B-side injection apparatus 20B in the step S1-2.

FIG. 4 shows a state where the reverse drive part 3 drives the mold reverse plate 14 and the movable mold 32 is rotated by 180 degrees from the state shown in FIG. 3. In the state shown in FIG. 4, the F-side cavity surface 37A formed on the side of the A-side injection apparatus 20A and the F-side cavity side 36B, which is subjected to a cavity-back by the thickness of the molded product of the third layer (moved backward to a previously determined second stop position on the F-side), face to each other. On the other hand, the F-side cavity surface 37B formed on the side of the B-side injection apparatus 20B faces the R-side cavity surface 36A.

FIG. 4 shows the state of step S1-7 of the sequence shown in FIG. 5. A molded product A1+B1+A3 is molded in the cavity on the side of the A-side injection apparatus 20A, and the molded product A2 is molded in the cavity on the side of the B-side injection apparatus 20B.

Next, a description will be given, with reference to FIG. 5, of an example of a molding operation of the laminate injection molding machine according to the present embodiment. FIG. 5 is a sequence chart of an example of the molding operation performed in the laminate injection molding machine according to the present embodiment. In FIG. 5, a state of the molded product in the cavity is shown together with each step of the molding sequence.

A resin is not filled in the cavity on the side of the A-side injection apparatus 20A at the time of starting the present sequence, and a state is set where the molded product A1 molded in the mold cycle one cycle prior to is remained in the cavity on the side of the B-side injection apparatus 20B.

A mold-close and a mold-clamp are performed in the state where the R-side cavity surface 37A is at the maximum forward position (step: S1-1). Then, the resin A2 is injected from the A-side injection apparatus 20A and the resin B1 is injected from the B-side injection apparatus 20B into the respective cavities (step: S1-2). Therefore, a molded product A2 is molded in the cavity on the side of the B-side injection apparatus 20B, and a molded product A1+B1 is molded in the cavity on the side of the A-side injection apparatus 20A.

At this time, each of the R-side cavity drive part 33A and the F-side cavity drive part 33B is controlled so as to apply a hydraulic pressure to the pistons 34A and 34B in the cylinders so that the R-side cavity surface 36A and the F-side cavity surface 36B do not move backward even if a filling pressure is generated when the resin is filled into the cavities.

A mold-open is performed after the completion of cooling (step: S1-3). Thereafter, runners molded in resin flow paths connecting the injection apparatuses 20A and 20B to the molded products in the cavities, respectively, are removed. Next, the reverse drive part 3 is driven, and the movable mold 32 rotates by 180 degrees as a first movement (step: S1-4). Thereby, the R-side cavity surface 37A and the F-side cavity surface 36B formed on the side of the A-side injection apparatus 20A face each other, and the F-side cavity surface 37B and the R-side cavity surface 36A formed on the side of the B-side injection apparatus 20B face each other.

Here, the cavity drive part 33A on the F-side is driven, and the F-side cavity surface 36B moves backward and stops at the previously determined second stop position. That is, the cavity block 35B having the F-side cavity surface 36B is moved in the direction of mold-open by a distance corresponding to the thickness of the molded product of the third layer (cavity-back) and the R-side cavity drive part 33A is not driven and stopped (step: S1-5). Next, a mold-close and a mold-clamp are performed (step: S1-6). Thereafter, a resin A3 is injected from the A-side injection apparatus 20A, and, on the other hand, the B-side injection apparatus 20B stops the injection (step: S1-7).

A mold-open is performed after the completion of cooling (step: S1-8). Then, after removing the runner, the molded product A1+B1+A3 of the three layers is taken out of the cavity on the side of the A-side injection apparatus 20A (step: S1-9). At this time, it is in the state where the molded product A2 is remained in the cavity on the side of the B-side injection apparatus 20B. One cycle is completed by the above, and, thereafter, the same cycle is repeated.

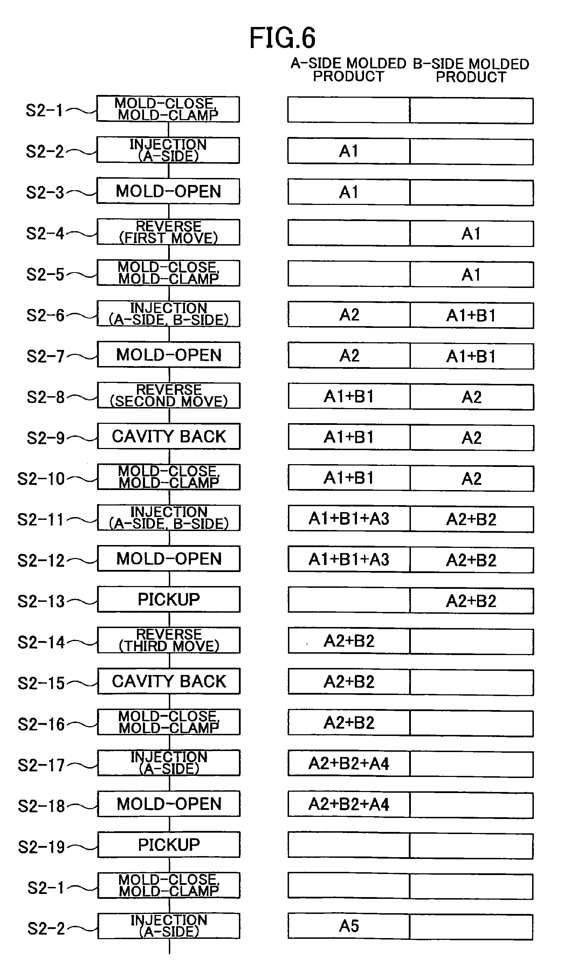

Next, a description will be given, with reference to FIG. 6, of another example of the molding operation of the laminate injection molding machine according to the present embodiment. FIG. 6 is a sequence chart of another example of the molding operation performed in the laminate injection molding machine according to the present embodiment. In FIG. 6, a state of the molded product in the cavity is shown together with each step of the molding sequence.

At the time of starting the sequence shown n FIG. 6, the inside of the cavity constituted by the R-side cavity surface 37A and the R-side cavity surface 36A formed on the side of the A-side injection apparatus 20A is empty, and the inside of the cavity constituted by the F-side cavity surface 37B and the F-side cavity surface 36B formed on the side of the B-side injection apparatus 20B is empty as well.

When a mold-close and a mold-clamp are performed (step: S2-1), the resin A1 is injected from the A-side injection apparatus 20A into the cavity, but the B-side injection apparatus 20B stops the injection (step: S2-2).

After the completion of cooling, a mold-open is performed (step: S2-3). Thereafter, the runner is removed and, subsequently, the movable mold 32 rotates by 180 degree as a first movement (step: S2-4). Thereby, the R-side cavity surface 37A and the F-side cavity surface 36B formed on the side of the A-side injection apparatus 20A face each other, and the F-side cavity surface 37B and the R-side cavity surface 36A formed on the side of the B-side injection apparatus 20B face each other.

After a mold-close and a mold-clamp are performed (step: S2-5), the resin B1 is injected from the A-side injection apparatus 20A and the resin B1 is injected from the B-side injection apparatus 20B into the respective cavities (step: S2-6). Thereby, the molded product A2 is molded in the cavity formed on the side of the A-side injection apparatus 20A, and the molded product A1+B1 is molded in the cavity formed on the side of the B-side injection apparatus 20B.

After the completion of cooling, a mold-open is performed (step: S2-7). Thereafter, the runner is removed and, subsequently, the movable mold 32 rotates by 180 degrees as a second movement (step: S2-8). Thereby, the R-side cavity surface 37A and the R-side cavity surface 36A formed on the side of the A-side injection-apparatus 20A face each other, and the F-side cavity surface 37B and the F-side cavity surface 36B formed on the side of the B-side injection apparatus 20B face each other.

Here, the R-side cavity drive part 33B is driven, and the cavity block 35A having the R-side cavity surface 36A is subjected to a cavity-back in the direction of mold-open by a distance corresponding to the thickness of the molded product of the third layer (step: S2-9). At this time, the R-side cavity drive part 33A is maintained to be stopped. Thereafter, a mold-close and a mold-clamp are performed (step: S2-10), and the A-side injection apparatus 20A injects the resin A3 and the B-side injection apparatus 20B injects the resin B2 (step: S2-11).

A mold-open is performed after the completion of cooling (step: S2-12), thereafter, the runner is removed, the molded product A1+B1+A3 of the three layers is taken out of the cavity formed on the side of the A-side injection apparatus 20A, and the inside of the cavity formed on the side of the B-side injection apparatus 20B is set in a state where the molded product A2+B2 is remained (step: S2-13).

Next, the movable mold 32 reversely rotates by 180 degrees as a third movement (step: S2-14). Thereby, the F-side cavity surface 36B formed on the side of the A-side injection apparatus 20A faces the F-side cavity surface 36B, and the F-side cavity surface 37B and the R-side cavity surface 36A formed on the side of the B-side injection apparatus 20B face each other.

The cavity drive part 33B on the F-side is driven, and the cavity block 35B having the F-side cavity surface 36B is subjected to a cavity-back in the mold-open direction by a distance corresponding to the thickness of the molded product of the third layer (step: S2-15). After a mold-close and a mold-clamp are performed (step: S2-16), the A-side injection apparatus 20A injects a resin A4 so as to mold a molded product A2+B2+A4 of three layers, but the B-side injection apparatus 20B stops the injection (step: S2-17).

A mold-open is performed (step: S2-18), thereafter, the runner is removed, and the molded product A2+B-2+A4 of three layers is taken out of the cavity formed on the side of the A-side injection apparatus 20A (step: S2-19). One cycle is completed by the above, and the same cycle is repeated thereafter.

As mentioned above, according to the present embodiment, when molding a laminate molded product of three layers, in which the first layer and the third layer are the same resin and the second layer is a different resin, the laminate molded product of three layers can be obtained simply by providing the cavity drive part to a single mold reverse type two-layer injection molding machine and incorporating an exclusive sequence program.

It should be noted that although the cavity drive parts 33A and 33B are incorporated into the mold apparatus 32 in the above-mentioned embodiment, they may be incorporated into the mold reverse plate 14. Additionally, the cavity drive parts 33A and 33B may be incorporated into the stationary mold 31. Further, they may be incorporated into not the mold apparatus 30 but the mold reverse plate 14.

Additionally, although the movable mold 32 has the two cavities and rotates by 180 degrees in the above-mentioned embodiment, the number of the cavities is not limited to two, and a large number of cavities may be attached. In this case, the reverse rotation angle is changed according to the number of cavities.

The present invention is not limited to the above-mentioned embodiments, and various variations and modifications may be made without departing from the scope of the present invention.

The present application is based on Japanese priority application No. 2005-309553 filed October 25, 2005, the entire contents of which are hereby incorporated herein by reference.

## Claims

1. A laminate injection molding machine for molding a multi-layer laminate product, comprising:
a mold-clamp apparatus to which a movable mold and a stationary mold are attached and performs mold-close and mold-clamp;
two injection apparatuses mounted on a frame to fill a melted resin into a mold; and
a control part that controls the injection apparatuses and said mold-clamp apparatus,
wherein said control part controls a cavity drive part that moves a cavity block forward or backward, the cavity block provided at least one of said movable mold and said stationary mold.

2. The laminate injection molding machine as claimed in claim 1, further comprising a reverse drive part that reversely rotates said movable mold, wherein the reverse drive part is controlled by said control part.

3. A laminate molding method performed by a laminate injection molding machine comprising:
a mold-clamp apparatus mounted on a frame;
a mold apparatus attached to the mold-clamp apparatus;
first and second injection apparatuses that inject resin to the mold apparatus;
first and second cavity drive parts for changing volumes of first and second cavities formed in said mold apparatus; and
a reverse drive part that rotates a movable mold of said mold apparatus,
wherein the laminate molding method comprises:
injecting a resin of a first layer from said first injection apparatus into said first cavity, and injecting a resin of a second layer from said first injection apparatus into said first cavity;
connecting said second cavity to said first injection apparatus and connecting said first cavity to said second injection apparatus by a first moving operation by said reverse drive part; and
injecting a resin of a third layer from said first injection apparatus into said second cavity.

4. The laminate molding method as claimed in claim 3, wherein, after performing said first moving operation, the resin in said second cavity is moved backward by driving said second cavity drive part.

5. The laminate molding method as claimed in claim 3, wherein the injection from said second injection apparatus into said first cavity is stopped while injecting the resin of the third layer from said first injection apparatus into said second cavity.

6. The laminate molding method as claimed in claim 3, wherein, after the injection of the resin of said third layer is completed and the molded product of three layers is taken out of said second cavity, the resin of the first layer is injected from said first injection apparatus into said second cavity.

7. A laminate molding method performed by a laminate injection molding machine comprising:
a mold-clamp apparatus mounted on a frame;
a mold apparatus attached to the mold-clamp apparatus;
first and second injection apparatuses that inject resin to the mold apparatus;
first and second cavity drive parts for changing volumes of first and second cavities formed in said mold apparatus; and
a reverse drive part that rotates a movable mold of said mold apparatus,
wherein the laminate molding method comprises:
injecting a resin of a first layer from said first injection apparatus into said first cavity, and stopping injection of a resin from said second injection apparatus into said second cavity;
connecting said second cavity to said first injection apparatus and connecting said first cavity to said second injection apparatus by a first moving operation by said reverse drive part;
injecting the resin of the first layer from said first injection apparatus into said second cavity and injecting a resin of a second layer from said second injection apparatus into said first cavity;
connecting said first cavity to said first injection apparatus and connecting said second cavity to said second injection apparatus by a second moving operation by said reverse drive part;
injecting a resin of a third layer from said first injection apparatus into said first cavity and injecting the resin of the second layer from said second injection apparatus into said second cavity;
taking a three-layer molded product out of said first cavity;
connecting said first cavity to said second injection apparatus and connecting said second cavity to said first injection apparatus by a third moving operation by said reverse drive part; and
injecting the resin of the third layer from said first injection apparatus into said second cavity.

8. The laminate molding method as claimed in claim 7, wherein, after performing said second moving operation, the resin in said first cavity is moved backward by driving said first cavity drive part.

9. The laminate molding method as claimed in claim 7, wherein, after performing said third moving operation, the resin in said second cavity is moved backward by driving said second cavity drive part.

10. The laminate molding method as claimed in claim 7, wherein after said third moving operation, the injection of the resin from said second injection apparatus into said first cavity is stopped.
